# EUROPEAN PATENT SPECIFICATION

(11) **EP 1 142 841 B1**
(45) Date of publication and mention of the grant of the patent: **27.09.2006**
(21) Application number: 01303039.0
(22) Date of filing: 30.03.2001
(51) Int. Cl.: C03C 3/085, C03C 10/12, C03C 10/00

(54) **Glass material, glass ceramic product, and process for producing the glass material**
Glaswerkstoff, glaskeramisches Produkt, und Verfahren zur Herstellung des Glaswerkstoffes
Matériau en verre, produit en vitrocéramique, et méthode de fabrication du matériau en verre

(30) Priority: 31.03.2000 JP 2000099921; 26.12.2000 JP 2000395793
(43) Date of publication of application: 10.10.2001
(73) Proprietor: NGK INSULATORS, LTD., Nagoya-City, Aichi Pref. 467-8530 (JP); NGK OPT Ceramics, Ltd, Komaki-shi, Aichi-ken 485-8557 (JP)
(72) Inventor: Ota, Takashi, c/o NGK Insulators Ltd, Nagoya-shi, Aichi-ken 467-8530 (JP); Tohyama, Kazutoshi, c/o NGK Opt Ceramics Ltd, Kamaki-shi, Aichi-ken 485-8557 (JP); Fukuyama, Masashi, c/o NGK Insulators Ltd, Nagoya-shi, Aichi-ken 467-8530 (JP); Ide, Akiyoshi, c/o NGK Insulators Ltd, Nagoya-shi, Aichi-ken 467-8530 (JP)
(74) Representative: Paget, Hugh Charles Edward

(56) References cited:
- EP-A- 0 931 773
- FR-A- 2 749 579
- GB-A- 2 279 343
- PATENT ABSTRACTS OF JAPAN vol. 1995, no. 02, 31 March 1995 (1995-03-31) & JP 06 329439 A (NIPPON ELECTRIC GLASS CO LTD), 29 November 1994 (1994-11-29)

## Description

### BACKGROUND OF THE INVENTION

### Field of the Invention

This invention relates to new glass materials and glass ceramic products, also to processes for their production and use and products made from them. A preferred glass ceramic material has a deformation temperature at which reheat press-forming can be performed in a glass state and further has a thermal expansion coefficient of -10 × 10⁻⁷ to 20 × 10⁻⁷ (1/°C) on the basis of precipitation of a negative thermal expansion crystal by crystallization treatment after the forming

### Description of Related Art

In optical communication technology at the present time, optical transmission members the medium of which is a quartz fiber are mainly used. In various devices connected to the quartz fiber, such as a waveguide, a quartz substrate is also used. As requirements of a glass material used in optical members, such as various devices, it is important that a minute and highly precise pattern can be formed and the glass material has a thermal expansion coefficient near to the thermal expansion coefficient of the quarts material to which the glass material is to be connected, typically 5 × 10⁻⁷ (1/°C). Therefore, a quartz substrate obtained by grinding quartz glass and then forming a minute and a highly precise pattern therein is used.

However, in the grinding method, which gives a high precision, much time is required for grinding since the glass material of the substrate is brittle, and adjustment is necessary in the manner that it does not happen that a grinding edge is hit on the end of the substrate so as to be damaged. Thus, the grinding method has problems that it takes much time to carry out this method and costs are also high. A pattern-forming method based on reheat press-forming is effective, in which patterns having very high precision can be together formed at low costs. However, if conventional glass materials have a deformation temperature Td at which reheat press-forming can be performed in a glass state, their thermal expansion coefficient α after the forming is greatly different from that of SiO₂, that is, 5 × 10⁻⁷ (1/°C). Conversely, even if materials have a thermal expansion coefficient α after the forming near that of SiO₂, that is, 5 × 10⁻⁷ (1/°C), the materials do not have any deformation temperature Td at which reheat press-forming can be performed in a glass state. Specifically, BK-7 as a material of the substrate has a thermal expansion coefficient α of 89 × 10⁻⁷ (1/°C) and a deformation temperature Td of 630 °C; thus, the BK-7 is capable of being subjected to reheat press-forming. However, the BK-7 has a thermal expansion coefficient that is largely different from that of quartz fibers. Substrates made of quarts (SiO₂) and Miraclon PH-3 made by NGK Insulators, Ltd. have thermal expansion coefficients α of 5 × 10⁻⁷ (1/°C) and -4 × 10⁻⁷ (1/°C) and deformation temperatures Td of 1700 °C and 770 °C respectively. These have a thermal expansion coefficient that is not very different from that of quarts fibers, but are not easily subjected to reheat press-forming.

GB-A-2279343 discloses a glass ceramic having the composition, in weight %:

| | |
|---|---|
| SiO₂ | 63 |
| Al₂O₃ | 23.3 |
| Li₂O | 3.7 |
| Na₂O | 0.5 |
| MgO | 0.5 |
| ZnO | 1.6 |
| BaO | 2.0 |
| TiO₂ | 2.4 |
| ZrO₂ | 1.7 |
| V₂O₅ | 0.3 |
| NaCl | 1.0 |

The material is suitable for plates, pipes and moulded articles.

JP-A-6-329439 discloses a crystallised glass having the composition, in weight %:

| | |
|---|---|
| SiO₂ | 61.0 |
| Al₂O₃ | 24.0 |
| Li₂O | 5.0 |
| ZnO | 0.2 |
| BaO | 0.3 |
| TiO₂ | 1.3 |
| ZrO₂ | 2.5 |
| P₂O₅ | 3.0 |
| MgO | 0.6 |
| Na₂O | 0.3 |
| K₂O | 0.3 |
| CaO | 1.8 |

### SUMMARY OF THE INVENTION

Thus a preferred aim of the present invention is to provide a glass material having a low deformation temperature when it is press-formed, and has a thermal expansion coefficient comparable to that of quartz materials when it is finished into a product. Such optical members include members assembled into a given shape, using an ultraviolet ray hardening type resin adhesive. It is also desired that the glass material itself of such optical members has a nature that it can transmit ultraviolet rays.

The present invention provides a SiO₂-Al₂O₃-Li₂O component-based glass material, as set out in claim 1. In one form, this glass material comprises BaO: 0.5-1.0 wt%. Since this glass material can have a deformation temperature of 750 °C or lower, it becomes practical to produce a glass product by reheat press-forming.

Other forms of the glass material of the present invention comprise CaO: 1.0-2.0 wt% or comprise B₂O₃: 0.01-1.0 wt%. These glass materials also make it easy to produce a glass product by reheat press-forming.

Preferably, the glass materials according to the present invention comprise no P₂O₅. If the glass materials comprise P₂O₅, crystallization is excessively promoted so that control of the crystallization is difficult. For example, their thermal expansion coefficient may not be within a desired range.

The material of the present invention is preferably a glass ceramic material which has a thermal expansion coefficient of -10 × 10⁻⁷ to 20 × 10⁻⁷ (1/°C). Thus, this glass ceramic material has a thermal expansion coefficient that is substantially the same as that of a quarts fiber or the like that is connected as an optical member. Therefore, the state of the connection is stable. As a result, it does not happen that the glass ceramic material is exfoliated so that communication is interrupted or signals deteriorate.

Preferably the glass ceramic material has a crystallization ratio of 30 to 50 %. Since this glass ceramic material has a crystallization ratio within the range of 30 to 50 %, this is a preferred material from the viewpoint of a thermal expansion coefficient and a precision in its shape. In other words, if the crystallization ratio is below 30 %, no glass ceramic material having a desired thermal expansion coefficient can be obtained. If this ratio is over 50 %, it is difficult to control the shape precision in the formed pattern, that is, distribution of crystal phases, the size of the respective crystal phases, and so on. Thus, a bad effect is unfavorably produced on the shape precision.

The material of the present invention may be a glass material, which has a thermal expansion coefficient of -10 × 10⁻⁷ to 20 × 10⁻⁷ (1/°C), and has an ultraviolet ray transmissivity. Since this low thermal-expansion glass ceramic material can transmit ultraviolet rays, this material can be fixed on an optical member through an ultraviolet ray hardening type adhesive, for example, between a supporting substrate and a lid substrate.

The material of the present invention may be a glass ceramic material, which has a crystallization ratio of 30 to 50 %, and has an ultraviolet ray transmissivity. This is suitable for reheat press-forming from the viewpoint of a thermal expansion coefficient and shape precision, and can be finished into a product that can be fixed on an optical member through an ultraviolet ray hardening type adhesive.

The present invention also provides a glass product made of the glass material of the invention described above. This can be suitably used in, for example, a fiber array, a waveguide substrate, an optical lens, a reflector for a lamp, a light source for a lamp, or the like. The method for forming the glass material to obtain a glass product having a desired shape is preferably a reheat press method, but may be a grinding method.

The present invention also provides a process for producing a SiO₂-Al₂O₃-Li₂O component-based glass material, as set out in claims 9. According to this process, it is possible to provide a glass material having a low deformation temperature when it is press-formed, and has a thermal expansion coefficient equivalent to that of quarts materials when it is finished into a product, as described above. It is allowable to perform reheat press-forming as a primary step, and then perform crystallization treatment, as a secondary step, after the forming; or perform a crystallization treatment step and subsequently perform a forming step based on reheat press-forming.

### BRIEF DESCRIPTION OF THE DRAWINGS

FIG. 1 is a schematic view showing reheat press process and crystallization steps in the present invention.
FIG. 2 is a schematic graph showing a relationship between temperature and time in a heat treatment.

### DETAILED DESCRIPTION OF PREFERRED EMBODIMENTS

Referring the attached drawings, the present invention will be specifically described hereinafter.

The glass ceramic of the present invention has the following composition.

A SiO₂-Al₂O₃-Li₂O component-based glass material comprises, as basic components, SiO₂: 60-63 wt%; Al₂O₃: 23-25 wt%; and Li₂O: 4-5 wt% and comprises, as nucleus generating agents, ZrO₂: 1.5-2.5 wt%; and TiO₂: 0.5-2.5 wt%. Preferably, the nucleus generating agents are ZrO₂: 2.3 wt%; and TiO₂: 2.2 wt%. Furthermore, the glass material comprises:

| | |
|---|---|
| MgO: | 0.5-1.5 wt%; |
| ZnO: | 0.5-1.2 wt%; |
| Na₂O: | 0.5-2.0 wt%; |
| K₂O: | 0.5-2.0 wt%; and any one (or two, or all three) of the following: |
| BaO: | 0.5-1.0 wt; |
| CaO: | 1.0-2.0 wt%; and |
| B₂O₃: | 0.01-1.0 wt%. |

The above-mentioned glass material is melted at 1500 °C or higher and is then quenched so as to yield a parent glass material having a deformation temperature of SiO₂ 750°C or lower.

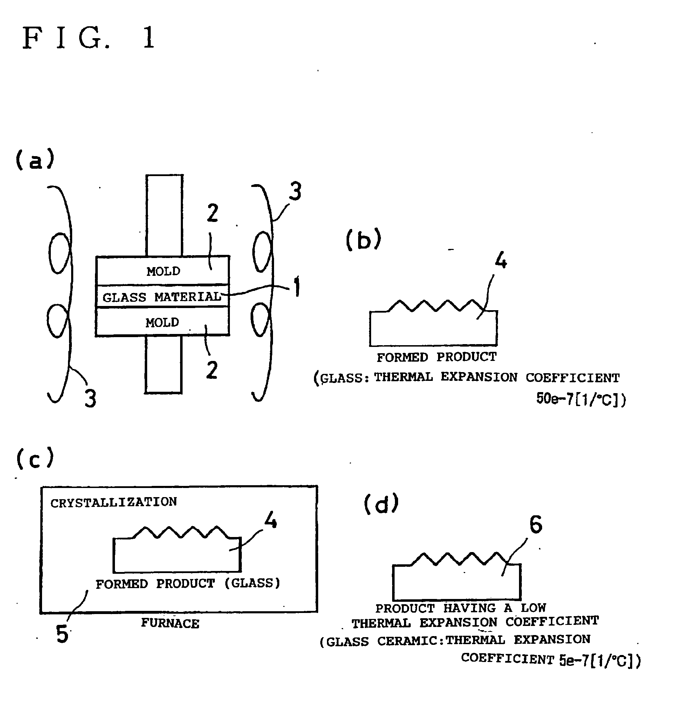

As shown in FIG. 1(a), the parent glass material 1 is subjected to reheat press-forming with desired molds 2 at 800 °C, up to which the molds are heated with heaters 3, so as to obtain a molded product 4, as shown in FIG. 1(b). The thermal expansion coefficient of the molded product 4 is 5 × 10⁻⁷ (1/°C).

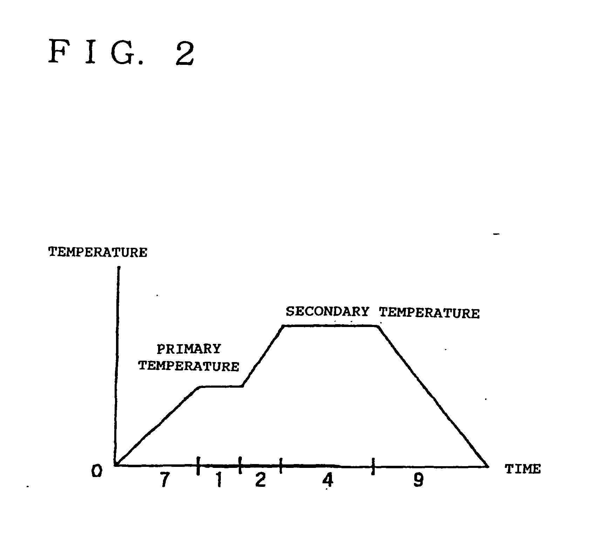

Next, this molded product 4 is put into a heating furnace 5 shown in FIG. 1(c), and is then crystallized under the following basic conditions by thermal treatment shown in FIG. 2, so that a glass ceramic product 6 having a thermal expansion coefficient of 5 × 10⁻⁷ (1/°C) can be obtained, as shown in FIG. 1(d).

Basic thermal treatment conditions
temperature rising speed: 100 °C/hour,
primary temperature: 700-750 °C,
primary temperature holding hour: 1 hour,
secondary temperature: 800-950 °C, and
secondary temperature holding hour: 2-4 hours

Nuclei made of TiO₂ and ZrO₂ make their appearance homogenously by holding the present material at a temperature near its deforming temperature Td. Furthermore, a fine crystal β-Eucryptite is homogeneously precipitated by holding the present material at 800-950°C for 2-4 hours. In this case, the ratio of the crystal to glass is from about 30 % to about 50 %. The average particle of the precipitated crystal is from 0.1 µm to 0.7 µm.

A thermal expansion coefficient of 5 to 10 × 10⁻⁷ (1/°C) can be obtained if the secondary temperature is as follows: 800-850°C in the case that the present material comprises BaO; 900-950 °C in the case that the present material comprises CaO; and 850-950°C in the case that the present material comprises B₂O₃. It has also been found out that if the secondary temperature ranges are limited as follows, resultant products have an ultraviolet ray transmissivity: 800-850 °C in the case that the present material comprises BaO; and 840-850 °C in the case that the present material comprises B₂O₃. In the case that the present material comprises CaO, resultant products have no ultraviolet ray transmissivity.

Hitherto, there have not been known glass materials that have such a low thermal expansion coefficient and further can transmit ultraviolet rays. Moreover, the glass material of the present invention has a deformation temperature of 750 °C or lower and is capable of being subjected to reheat press-forming. Therefore, a V-groove can be made easily and more precisely by the reheat press-forming than by any grinding method, in particular about an optical fiber array. Additionally, in the case that the glass product of the present invention can transmit ultraviolet rays, an ultraviolet ray hardening type adhesive can be used, for example, between a supporting substrate and a lid substrate in order to assemble an optical member.

### Examples

Glass materials according to the present invention having the above-mentioned compositions and produced by the above-mentioned production process were examined.

**Table 1**

| Compositions | | | | | | | | | | | | | | |
|---|---|---|---|---|---|---|---|---|---|---|---|---|---|---|
| No. | SiO₂ | Al₂O₃ | Li₂O | MgO | P₂O₅ | ZrO₂ | ZrO | Sb₂O₃ | K₂O | Na₂O | TiO₂ | BaO | CaO | B₂O₃ |
| ① | 62.7 | 23.5 | 4.4 | 1.5 | | 2.3 | 1.2 | 1.4 | 2.0 | 0.5 | 1.9 | 0.5 | | |
| ② | 60.9 | 24.1 | 4.8 | 0.5 | 1.7 | 2.1 | 0.5 | 1.4 | 0.5 | 0.5 | 2.0 | | 1.0 | |
| ③ | 60.9 | 24.1 | 4.8 | 0.5 | 1.7 | 2.1 | 0.5 | 1.4 | 0.5 | 0.5 | 2.0 | | | 1.0 |

The present materials were SiO₂-Al₂O₃-Li₂O component-based glass materials and comprised, as basic components, SiO₂: 60-63 wt%; Al₂O₃: 23-25 wt%; and Li₂O: 4-5 wt% and comprised, as modifying components, ZrO₂: 1.5-2.5 wt%; TiO₂: 0.5-2.5 wt%; MgO: 0.5-1.5 wt%; ZnO: 0.5-1.2 wt%; Na₂O: 0.5-2.0 wt%; and K₂O: 0.5-2.0 wt% in common. The glass material ① further comprised 0.5 wt% of BaO, and the glass material ② further comprised 1.0 wt% of CaO. The glass material ③ further comprised 1.0 wt% of B₂O₃.

**Table 2**

| No. | Parent glass | | | Glass ceramic | | |
|---|---|---|---|---|---|---|
| | Thermal expansion coefficient α (×10⁻⁷[1/°C]) | Td[°C] | Tg[°C] | Crystallizat ion condition (secondary temperature) [°C] | Thermal expansion coefficient α (×10⁻⁷[1/°C]) | Light transmissivity % (360nm) |
| ① | 49.2 | 742.9 | 676.8 | 800 | 10 | 25.6 |
| | | | | 850 | 7.2 | 22.1 |
| ② | 47.9 | 737.5 | 684.0 | 950 | 10 | 0 |
| ③ | 51.4 | 747.9 | 675.8 | 850 | 8.6 | 3.2 |
| | | | | 900 | 7.9 | 0 |

About the respective glass materials, their parent glass materials had a deformation temperature Td of 750 °C or lower. Therefore, in these glass materials, a V-groove can easily be formed by reheat press-forming. In addition, about the relationship between the crystallization condition and their thermal expansion coefficient, the thermal expansion coefficient α was allowed to be made into a value equivalent to that of SiO₂ by adding each of three components BaO, CaO and B₂O₃ and adjusting the secondary temperature for crystallization. According to this manner, it is possible to provide a glass ceramic material having a deformation temperature at which reheat press-forming can be performed and further having a thermal expansion coefficient of -10 × 10⁻⁷ to 20 × 10⁻⁷ (1/°C), which is equivalent to that of quartz, on the basis of precipitation of a negative thermal expansion crystal by crystallization after the forming. Moreover, glass materials having a superior light transmissivity at 360 nm can be used to produce a glass product that can be fixed onto an optical member through an ultraviolet ray hardening type adhesive.

As described above, according to the present invention, a member for which a difference in thermal expansion between this member and another glass member adhered thereto is made as small as possible can be formed by reheat press-forming. The low thermal-expansion glass ceramic material that can transmit ultraviolet rays makes it possible to form, in an optical fiber array wherein optical fibers are arrayed and fixed between a supporting substrate and a lid substrate, a V-groove(in which the optical fibers should be arrayed) in any one of the two substrates by reheat press-forming.

Additionally, the glass material of the present invention can be formed into a complicated shaped by reheat press-forming, and has a superior light transmissivity. In particular, the present glass material has a low thermal expansion coefficient. For these reasons, if the present glass material is used, for example, in a non-spherical lens of an optical instrument which may undergo high temperature and low temperature, it is not feared that undesired shift of its optical axis is caused. For the same reasons, the glass material of present invention can be used suitably for a case for fiber-melted coupler.

Preferably, wt% figures given herein together to define a composition are intended to add to 100% : alternatively it can be stated that the compositions consist or consist essentially of the listed substances in the listed quantities.

## Claims

1. A SiO₂-Al₂O₃-Li₂O component-based glass material, which comprises, as basic components, SiO₂: 60-63 wt%; Al₂O₃: 23-25 wt%; and Li₂O: 4-5 wt% and, as modifying components, ZrO₂ : 1.5-2.5 wt%; TiO₂: 0.5-2.5 wt%; MgO: 0.5-1.5 wt%; ZnO: 0.5-1.2 wt%; Na₂O: 0.5-2.0 wt%; and K₂O: 0.5-2.0 wt%, and further comprises any one or two, or all three, of BaO: 0.5-1.0 wt%; CaO: 1.0-2.0 wt%; B₂O₃: 0.01-1.0 wt%.

2. A glass ceramic material, which comprises the glass material according to claim 1, and has a thermal expansion coefficient of -10 × 10⁻⁷ to 20 × 10⁻⁷ (1/°C).

3. A glass ceramic material, which comprises the glass material according to claim 1, and has a crystallization ratio of 30 to 50 %.

4. A glass material, which comprises the glass material according to claim 1, has a thermal expansion coefficient of -10 × 10⁻⁷ to 20 × 10⁻⁷ (1/°C), and has an ultraviolet ray transmissivity.

5. A glass ceramic material, which comprises the glass material according to claim 1, has a crystallization ratio of 30 to 50 %, and has an ultraviolet ray transmissivity.

6. A glass product made of the glass material according to any one of claims 1 to 5.

7. A process for producing a SiO₂-Al₂O₃-Li₂O component-based glass material, comprising the steps of subjecting a glass material obtained by blending SiO₂: 60-63 wt%; Al₂O₃: 23-25 wt%; and Li₂O: 4-5 wt%, as basic components, and ZrO₂: 1.5-2.5 wt%; TiO₂: 0.5-2.5 wt%; MgO: 0.5-1.5 wt%; ZnO: 0.5-1.2 wt%; Na₂O: 0.5-2.0 wt%; and K₂O: 0.5-2.0 wt%, as modifying components, with any one or two, or all three of BaO: 0.5-1.0 wt%, CaO: 1.0-2.0 wt%, and B₂O₃: 0.01-1.0 wt%, melting the blend and quenching the melted blend to press-forming into a desired shape; and subjecting the product obtained in the above-mentioned step to crystallization treatment, to precipitate a negative thermal expansion crystal having a thermal expansion coefficient of -10 × 10⁻⁷ to 20 × 10⁻⁷ (1/°C).

## Patentansprüche

1. Auf SiO₂-Al₂O₃-Li₂O-Komponenten basierendes Glasmaterial, das als Grundkomponenten die folgenden: SiO₂: 60-63 Gew.-%; Al₂O₃: 23-25 Gew.-%; und Li₂O: 4-5 Gew.-%, als modifizierende Komponenten die folgenden: ZrO₂: 1,5-2,5 Gew.-%; TiO₂: 0,5-2,5 Gew.-%; MgO: 0,5-1,5 Gew.-%; ZnO: 0,5-1,2 Gew.-%; Na₂O: 0,5-2,0 Gew.-%; und K₂O: 0,5-2,0 Gew.-%, und außerdem eine, zwei oder alle drei von BaO: 0,5-1,0 Gew.-%; CaO: 1,0-2,0 Gew.-%; B₂O₃: 0,01-1,0 Gew.-% umfasst.

2. Glaskeramikmaterial, das Glasmaterial nach Anspruch 1 umfasst und einen Wärmeausdehnungskoeffizienten von -10 x 10⁻⁷ bis 20 x 10⁻⁷ (1/°C) aufweist.

3. Glaskeramikmaterial, das Glasmaterial nach Anspruch 1 umfasst und einen Kristallisationsgrad von 30 bis 50 % aufweist.

4. Glasmaterial, das Glasmaterial nach Anspruch 1 umfasst, einen Wärmeausdehnungskoeffizienten von -10 x 10⁻⁷ bis 20 x 10⁻⁷ (1/°C) aufweist und für Ultraviolettstrahlen durchlässig ist.

5. Glaskeramikmaterial, das Glasmaterial nach Anspruch 1 umfasst, einen Kristallisationsgrad von 30 bis 50 % aufweist und für Ultraviolettstrahlen durchlässig ist.

6. Glasprodukt aus Glasmaterial nach einem der Ansprüche 1 bis 5.

7. Verfahren zur Herstellung von auf SiO₂-Al₂O₃-Li₂O-Komponenten basierendem Glasmaterial, umfassend die Schritte des Versetzens eines durch Mischen von SiO₂: 60-63 Gew.-%; Al₂O₃: 23-25 Gew.-%; und Li₂O: 4-5 Gew.-% als Grundkomponenten und ZrO₂: 1,5-2,5 Gew.-%; TiO₂: 0,5-2,5 Gew.-%; MgO: 0,5-1,5 Gew.-%; ZnO: 0,5-1,2 Gew.-%; Na₂O: 0,5-2,0 Gew.-%; und K₂O: 0,5-2,0 Gew.-% als modifizierende Komponenten erhaltenen Glasmaterials mit einem, zweien oder allen dreien von BaO: 0,5-1,0 Gew.-%; CaO: 1,0-2,0 Gew.-%; B₂O₃: 0,01-1,0 Gew.-%, des Schmelzens des Gemischs und des Quenchens des geschmolzenen Gemischs, um es zu einer gewünschten Form zu pressformen; sowie des Unterziehens des im obigen Schritt erhaltenen Produkts einer Kristallisationsbehandlung, um Kristalle mit negativer Wärmeausdehnung mit einem Wärmeausdehnungskoeffizienten von -10 x 10⁻⁷ bis 20 x 10⁻⁷ (1/°C) auszufällen.

## Revendications

1. Un matériau en verre à base d'un composant de SiO₂₋Al₂O₃-LiO₂ qui comprend, comme composant basique, SiO₂ : 60-63 % en poids ; Al₂O₃ : 23-25 % en poids ; et Li₂O : 4-5 % en poids et, comme composants modificateurs ZrO₂ : 1,5-2,5 % en poids ; TiO₂ : 0,5-2,5 % en poids ; MgO : 0,5-1,5 % en poids ; ZnO : 0,5-1,2 % en poids ; Na₂O : 0,5-2,0 % en poids ; et K₂O : 0,5-2,0 % en poids, et comprend de plus l'un ou deux, ou trois de BaO : 0,5-1,0 % en poids ; CaO : 1,0-2,0 % en poids ; B₂O₃ : 0,01-1,0 % en poids.

2. Matériau céramique en verre, qui comprend le matériau en verre selon la revendication 1 et a un coefficient de dilatation thermique de -10 x 10⁻⁷ à 20 x 10⁻⁷ (1/°C).

3. Matériau céramique en verre, qui comprend le matériau en verre selon la revendication 1 et a un rapport de cristallisation de 30 à 50 %.

4. Matériau en verre, qui comprend le matériau en verre selon la revendication 1, a un coefficient de dilatation thermique de -10 x 10⁻⁷ à 20 x 10⁻⁷ (1/°C), et a une transmissivité des rayons ultraviolets.

5. Matériau céramique en verre, qui comprend le matériau en verre selon la revendication 1, qui a un rapport de cristallisation de 30 à 50 %, et a une transmissivité des rayons ultraviolets.

6. Produit de verre fait du matériau en verre selon l'une quelconque des revendications 1 à 5.

7. Procédé de production d'un matériau en verre à base d'un composant de SiO₂-Al₂O₃-Li₂O comprenant les étapes de soumettre un matériau en verre obtenu en mélangeant SiO₂ : 60-63 % en poids ; Al₂O₃ : 23-25 % en poids ; et Li₂O : 4-5 % en poids, comme composants basiques, et ZrO₂ : 1,5-2,5 % en poids ; TiO₂ : 0,5-2,5 % en poids ; MgO : 0,5-1,5 % en poids ; ZnO : 0,5-1,2 % en poids ; Na₂O : 0,5-2,0 % en poids ; et K₂O : 0,5-2,0 % en poids, comme composants modificateurs, à l'un ou deux, ou trois de BaO : 0,5-1,0 % en poids, CaO : 1,0-2,0 % en poids, et B₂O₃ : 0,01-1,0 % en poids, de faire fondre le mélange et de tremper le mélange fondu pour former à la presse à une forme souhaitée ; et de soumettre le produit obtenu dans l'étape ci-dessus à un traitement de cristallisation pour précipiter un cristal à dilatation thermique négative ayant un coefficient de dilatation thermique de -10 x 10⁻⁷ à 20 x 10⁻⁷ (1/°C).
